# EUROPÄISCHE PATENTSCHRIFT

(11) **EP 2 757 162 B1**
(45) Veröffentlichungstag und Bekanntmachung des Hinweises auf die Patenterteilung: **21.10.2015**
(21) Anmeldenummer: 13152214.6
(22) Anmeldetag: 22.01.2013
(51) Int. Cl.: C13K 5/00

(54) **Verfahren zur Steigerung der Ausbeute bei der Lactoseherstellung (II)**
Process for increasing yield in the manufacture of lactose (II)
Procédé d'augmentation du rendement pour la fabrication de lactose (II)

(43) Veröffentlichungstag der Anmeldung: 23.07.2014
(73) Patentinhaber: DMK Deutsches Milchkontor GmbH, 27404 Zeven (DE)
(72) Erfinder: Döring, Sven-Rainer, 27404 Zeven (DE)
(74) Vertreter: Fabry, Bernd

(56) Entgegenhaltungen:
- EP-A1- 0 052 541
- WO-A1-2012/047122
- SHIN YEE WONG ET AL: "Designing a lactose crystallization process based on dynamic metastable limit", JOURNAL OF FOOD ENGINEERING, BARKING, ESSEX, GB, Bd. 111, Nr. 4, 1. März 2012 (2012-03-01), Seiten 642-654, XP028417175, ISSN: 0260-8774, DOI: 10.1016/J.JFOODENG.2012.03.003 [gefunden am 2012-03-20]

## Beschreibung

### GEBIET DER ERFINDUNG

Die Erfindung befindet sich auf dem Gebiet der Molkereiindustrie und betrifft ein verbessertes Verfahren zur Herstellung von Lactose.

### STAND DER TECHNIK

Lactose gehört zur Gruppe der Disaccharide und besteht aus den beiden Molekülen D-Galactose und D-Glucose, die über eine β-1,4-glycosidische Bindung verbunden sind.

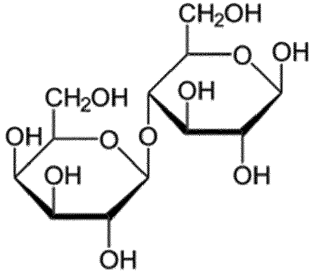

Lactose ist eine kristalline, farblose Substanz mit süßem Geschmack; die Süßkraft liegt je nach Konzentration zwischen 25 und 60 % der von Saccharose. Lactose stellt einen wichtigen Bestandteil der Milch dar und verfügt über eine Vielzahl von ernährungsphysiologischen Vorteilen. So dient es dem Metabolismus als Energiequelle, unterstützt die Calcium-resorption, hemmt die Bildung von Fäulnisbakterien im Darm und wirkt zumindest in größeren Mengen eingenommen, abführend. In der Lebensmitteltechnik wird es vor allem zur Herstellung von Milchsäure und als Texturiermittel für Tiefkühlprodukte eingesetzt. Da es Lebensmittel einen cremigen Geschmack verleiht, stellt es ein weit verbreitetes Additiv dar.

Lactose stellt ein Nebenprodukt bei der Herstellung von Proteinpulvern dar. Dabei wird üblicherweise Molke durch Ultrafiltration von Proteinen befreit, die anschließend einer Sprühtrocknung unterworfen werden.

Ein heute übliches Verfahren zur Herstellung von Lactose wird beispielsweise in der internationalen Patentanmeldung WO 2002 050089 A1 (Food Science Australia) beschrieben. Hierzu wird im ersten Verfahrensschritt das bei der Ultrafiltration der Molke gewonnene Permeat durch Umkehrosmose (RO) oder Nanofiltration (NF) aufkonzentriert. Anschließend wird das so gewonnene Konzentrat in zwei Schritten demineralisiert, d.h. zunächst mit einem Erdalkalisalz, üblicherweise einer wässrigen Calciumchloridlösung versetzt, wobei die Mineralien als Calciumphosphat gefällt werden. In der zweiten Fällungsstufe wird die Löslichkeit der Calciumsalze durch Zugabe von niederen Alkoholen weiter herabgesetzt und weiteres Phosphat gefällt. Die Abtrennung der Salze erfolgt dann mit Hilfe von geeigneten Filtrationsvorrichtungen, wie z.B. Membranen, Separatoren oder dergleichen. Anschließend wird die gereinigte Lactoselösung einer Vakuumdestillation unterworfen und auf einen Feststoffgehalt von etwa 65 Gew.-% eingestellt.

Auch das Patent US 4,202,909 beschreibt ein Verfahren zur Gewinnung von Lactose, bei dem man zunächst Molke einer Ultrafiltration unterwirft, das UF-Permeat einer Demineralisierung unterwirft, das Permeat aufkonzentriert und die Lactose dann aus der Mutterlauge abscheidet. Insbesondere wird beschrieben, dass die Mutterlauge dann noch einmal demineralisiert und aufgearbeitet werden kann, um eine weitere Menge Lactose zu gewinnen. Ähnlichen Inhalts ist auch die GB 1575089 B **bei der** in Beispiel 1 ein Verfahren zur Gewinnung von Lactose beschrieben wird, bei dem man zunächst Molke einer Ultrafiltration unterwirft, das UF-Permeat einer Demineralisierung unterwirft, das Permeat aufkonzentriert und die Lactose dann aus der Mutterlauge abscheidet.

Üblich nach den Verfahren des Stands der Technik ist, dass die Mutterlauge, die etwa 90 Gew.-% Lactose in der Trockenmasse enthält, nach dem Eindampfer in den Kristallisationstank gefördert wird. Dieser wird zum Befüllen geheizt, um die Lactose in Lösung zu halten. Oberhalb von 93,5 °C liegt reine beta-Lactose vor. Beim Abkühlen wandelt sich diese jedoch quantitativ in alpha-Lactose um. Allerdings handelt es sich hier nicht um einen scharfen Phasenübergang, denn zunächst wird eine metastabile Phase durchlaufen, aus der sich dann die alpha-Lactosekristalle abscheiden. Beim weiteren Abkühlen folgt man in der Regel der Sättigungskurve, damit die Kristalle ausreichend Zeit haben zu wachsen.

Nach dem Beginn des Kristallisationsprozesses wird auf eine Temperatur von 30 bis 40 °C abgekühlt, die Lauge für 1 bis 3 h bei dieser Temperatur ruhen gelassen und dann weiter auf 10 °C abgekühlt. Die gesamte Kühlzeit beträgt etwa 20 h.

Problematisch ist, dass bei diesem Kühlverlauf immer wieder Phasen metabstabilen Zustandes durchschritten werden, bei denen sich erneut frische Kristallkeime bilden können, die jedoch wenig Zeit zum Wachsen haben und sehr klein bleiben. Da bei der Abscheidung der alpha-Lactose Kristalle im Dekanter die frisch gebildeten kleinen Kristalle mit einem Durchmesser von weniger als 80 µm nicht erfasst werden, gehen etwa 17 % der Lactose verloren.

Durch das Rühren kommt es im Dekanter zudem zu Kristallbruch, wobei wiederum Material entsteht, dass wegen seines zu geringen Teilchendurchmessers nicht abgeschieden werden kann. Auf diese Weise gehen weitere 20 % der Lactose verloren, so dass die Mutterlaufe schließlich noch 35 bis 40 % Lactose enthält, die mit hohem Aufwand wieder aufgearbeitet werden muss, um in der Gesamtbetrachtung des Verfahrens zu einer akzeptablen Ausbeute zu gelangen.

Es liegt auf der Hand, dass jede Verfahrensverbesserung, die dazu führt, dass sich die Restmenge an Lactose in der Mutterlauge verringert, einen erheblichen Einfluss auf die Ökonomie des Verfahrens hätte. Somit hat die Aufgabe der vorliegenden Erfindung darin bestanden, bestehende Verfahren zur Lactoseherstellung zu verbessern und die Restmenge an alpha-Lactose, die nach der Kristallisation mit der Mutterlauge verloren geht, auf maximal 20 Gew.-% zu begrenzen.

### BESCHREIBUNG DER ERFINDUNG

Gegenstand der Erfindung ist ein erstes Verfahren zur Verbesserung der Ausbeute bei der Herstellung von kristalliner alpha-Lactose, bei dem man
(a1) eine wässrige Lactoselösung schrittweise bis auf etwa 10 °C abkühlt,
(a2) eine erste Menge ausgefallener alpha-Lactosekristalle von der Mutterlauge abtrennt,
(a3 die Mutterlauge mit einer solchen Menge einer Kohlenhydratverbindungen ausgewählt aus der Gruppe, die gebildet wird von Monosacchariden, Cellobiose, Gentiobiose, Isomaltose, Isomaltulose, Lactulose, Laminaribiose, Maltose, Maltulose, Melibiose, Neohesperidose, Neotrehalose, Nigerose, Rutinose, Sophorose, Saccharose und Trehalose versetzt, dass das Löslichkeitsprodukt der Lactose bei der jeweiligen Temperatur überschritten wird,
(a4) eine zweite Menge ausgefallener alpha-Lactosekristalle von der Mutterlauge abtrennt und
(a5) die beiden Mengen an alpha-Lactosekristallen vereinigt.

Die bei der Abscheidung der Lactosekristalle anfallende Mutterlauge enthält üblicherweise noch immer 30 bis 35 Gew.-% Lactose. Durch Zugabe von bis zu 5 Gew.-% eines Zuckers, speziell von Glucose, kann das Löslichkeitsprodukt der Lactose verschoben werden, so dass in der Mutterlauge nur noch etwa 15 bis 17 Gew.-% Lactose verbleiben.

Die Erfindung umfasst auch eine alternatives zweites Verfahren zur Verbesserung der Ausbeute bei der Herstellung von kristalliner alpha-Lactose, bei dem man
(b1) eine wässrige Lactoselösung mit einer solchen Menge einer Kohlenhydratverbindungen ausgewählt aus der Gruppe, die gebildet wird von Monosacchariden, Cellobiose, Gentiobiose, Isomaltose, Isomaltulose, Lactulose, Laminaribiose, Maltose, Maltulose, Melibiose, Neohesperidose, Neotrehalose, Nigerose, Rutinose, Sophorose, Saccharose und Trehalose versetzt, dass das Löslichkeitsprodukt der der in Lösung befindlichen Menge an Lactose überschritten wird,
(b2) die Lactoselösung schrittweise bis auf etwa 10 °C abkühlt,
(b3) und die Menge an ausgefallenen alpha-Lactosekristallen von der Mutterlauge abtrennt.

Bei dieser Ausgestaltungsform, die den gleichen erfinderischen Gedanken nutzt, setzt man die Kohlenhydrate der Mutterlauge direkt zu. Dadurch wird ein zweites Durchlaufen des Abkühl- und Abtrennprozesses vermieden, allerdings weist die resultierende Mutterlauge gegenüber der ersten Verfahrensvariante einen etwas höheren Restgehalt von Lactose in der Größenordnung von 20 bis 25 Gew.-% auf.

Die Kohlenhydrate gehen bei diesem Verfahren zwar verloren, die größere Menge an wertvoller Lactose gleicht diesen Wertverlust jedoch mehr als aus. Zudem kann man auch billigere Zuckerquelle wie beispielsweise Zuckermelasse aus der Rübenherstellung einsetzen, was die Wirtschaftlichkeit des Verfahrens weiter verbessert.

Ein weiterer Gegenstand der Erfindung umfasst somit auch ein Verfahren zur Herstellung von kristalliner alpha-Lactose, bei dem man
(i) Molke einem Trennverfahren unterwirft, bei dem eine proteinreiche und eine lactosereiche Fraktion erhalten wird,
(ii) die lactosereiche Fraktion gegebenenfalls nach Aufkonzentrierung einer Demineralisierung unterwirft, bei der schwerlösliche Salze gefällt werden,
(ii) den demineralisierten Rückstand gegebenenfalls nach weiterer Aufkonzentrierung abkühlt, bis Lactose kristallin ausfällt,
welches sich, dadurch auszeichnet, dass man
(a1) eine erste Menge ausgefallener alpha-Lactosekristalle von der Mutterlauge abtrennt,
(a2) die Mutterlauge mit einer solchen Menge einer Kohlenhydratverbindungen ausgewählt aus der Gruppe, die gebildet wird von Monosacchariden, Cellobiose, Gentiobiose, Isomaltose, Isomaltulose, Lactulose, Laminaribiose, Maltose, Maltulose, Melibiose, Neohesperidose, Neotrehalose, Nigerose, Rutinose, Sophorose, Saccharose und Trehalose versetzt, dass das Löslichkeitsprodukt der Lactose bei der jeweiligen Temperatur überschritten wird,
(a3) eine zweite Menge ausgefallener alpha-Lactosekristalle von der Mutterlauge abtrennt und
(a4) die beiden Mengen an alpha-Lactosekristallen vereinigt
oder
(b1) eine wässrige Lactoselösung mit einer solchen Menge einer Kohlenhydratverbindungen ausgewählt aus der Gruppe, die gebildet wird von Monosacchariden, Cellobiose, Gentiobiose, Isomaltose, Isomaltulose, Lactulose, Laminaribiose, Maltose, Maltulose, Melibiose, Neohesperidose, Neotrehalose, Nigerose, Rutinose, Sophorose, Saccharose und Trehalose versetzt, dass das Löslichkeitsprodukt der der in Lösung befindlichen Menge an Lactose überschritten wird
(b2) die Lactoselösung schrittweise bis auf etwa 10 °C abkühlt,
(b3) und die Menge an ausgefallenen alpha-Lactosekristallen von der Mutterlauge abtrennt.

### LACTOSELÖSUNGEN

Lactoselösungen, die im Sinne des erfindungsgemäßen Verfahrens als Ausgangsstoffe für die Gewinnung der alpha-Lactosekristalle in Betracht kommen, werden in der Regel ausgehend von Molke gewonnen. Dazu wird Molke zunächst in eine proteinreiche und eine lactosereiche Fraktion aufgespalten. Das bevorzugte Trennverfahren stellt hierfür die Ultrafiltration (UF) dar, bei der das UF Retentat zur Gewinnung von Proteinen weiterverarbeitet und das UF Permeat für die Gewinnung der Lactose verwendet wird. Typischerweise enthält das UF Retentat etwa 20 Gew.-% Trockenmasse und davon etwa 2 Gew.-% Lactose, der Aschegehalt liegt bei etwa 1 Gew.-%. Das UF Permeat, das zur Herstellung der Lactose weiterverarbeitet wird, weist hingegen eine Trockenmasse von etwa 4,5 bis 5,5 Gew.-% auf, wobei der Gehalt an Lactose bei ca. 4,1 bis 4,6 und der Aschegehalt bei etwa 0,3 bis 0,5 liegt.

Als optionaler, jedoch im Allgemeinen bevorzugter Schritt, wird das UF Permeat aufkonzentriert, wobei man eine Trockenmasse von etwa 10 bis 30 Gew.-% - entsprechend 10 bis 30 °Brix - einstellt. Dies erfolgt vorzugsweise entweder durch Umkehrosmose (RO) oder Nanofiltration (NF).

Das UF Permeat weist - gegebenenfalls nach Aufkonzentrieren - einen Gehalt an Mineralien in der Größenordnung von 1 bis 2 Gew.-% auf. Um die Spezifikation, die bei unter 0,3 Gew.-% liegt, erreichen zu können, werden die Lösungen durch Zugabe von Basen zunächst auf einen annähernd neutralen pH-Wert im Bereich von 6 bis 8 eingestellt und die Mineralien, die im Wesentlichen lösliche Phosphate darstellen mit einer solchen Menge einer Lösung eines wasserlöslichen Calciumsalzes versetzt, dass schwerlösliche Calciumsalze gefällt werden. Zur Einstellung des pH-Wertes und zur Fällung werden NaOH, eine wässrige Zubereitung aus Calciumchlorid und Alkalihydroxid oder Calciumhydroxid einsetzt. Grundsätzlich können zur Einstellung des pH-Wertes auch andere Alkali- oder Erdalkalibasen, wie z.B.-KOH eingesetzt werden. Auch die Natur des Fällungssalzes ist an sich unkritisch, es lassen sich beispielsweise Bariumsalze fällen. Die Verwendung von Calciumsalzen hat indes den Vorteil, dass das Fällungsmittel kostengünstig und die Salze ein sehr niedriges Löslichkeitsprodukt haben, die Fällung also im Wesentlichen vollständig ist. Auch ohne Zugabe von Fällungsmitteln erfolgt die Demineralisierung in Rührkesseln, wobei es sich als vorteilhaft erwiesen hat, eine Temperatur im Bereich von etwa 50 bis 90 und vorzugsweise von etwa 80 °C einzustellen. Die Fällungszeit liegt typischerweise bei etwa 20 bis 120 und vorzugsweise etwa 30 bis 45 min, wobei diese Angaben nur als Anhaltspunkte zu verstehen sind, da niedrigere Temperaturen längere Reaktionszeiten erfordern und umgekehrt. Nach der Fällung werden die Salze abgetrennt, beispielsweise in Separatoren, welche das größere spezifische Gewicht der gefällten Partikel ausnutzen. Es ist aber ebenso möglich, die Abtrennung beispielsweise durch Membranfilter im Rahmen einer weiteren Ultrafiltration im Bereich 5 bis 150 kDa, vorzugsweise 10 bis 50 kDa vorzunehmen.

Der gereinigte Strom enthält jetzt typischerweise etwa 15 bis 20, vorzugsweise etwa 17,5 Gew.-% Lactose, während der Aschegehalt bereits auf etwa 0,8 vermindert worden ist. Falls gewünscht oder erforderlich, kann sich nun eine zweite Demineralisierungsstufe anschließen, bei der man dem vorgereinigten Strom eine Menge an niederen Alkoholen, insbesondere an Ethanol zusetzt, um das Löslichkeitsprodukt der noch enthaltenen Calciumsalze weiter herabzusetzen. Auf diese Weise kann im Bedarfsfall eine weitere Menge an Salzen gefällt und wie oben beschrieben abgetrennt werden.

Als zweiter optionaler, jedoch im Allgemeinen ebenfalls bevorzugter Schritt, wird der demineralisierte lactosereiche Strom nach Verlassen der Separatoren ein weiteres Mal aufkonzentriert, wobei man einen Feststoffgehalt - im Wesentlichen identisch mit dem Gehalt an Lactose - von etwa 50 bis 70 Gew.-% - entsprechend 40 bis 50 °Brix - einstellt. Dies erfolgt vorzugsweise durch eine Vakuumeindampfung, bei der das Produkt auf vorzugsweise etwa 65 Gew.-% entwässert und gegebenenfalls auch Alkohol aus der Demineralisierungsstufe abgetrennt wird. Die so erhaltenen wässrigen Lactoselösungen können nun in die Kristallisationsstufe eingesetzt werden.

### KOHLENHYDRATE

Als Kohlenhydrate, die geeignet sind, das Löslichkeitsprodukt der Lactose signifikant herabzusetzen, kommen insbesondere Mono- und/oder Disaccharide und dabei sowohl Aldosen als auch Ketosen in Betracht. Typische Beispiele umfassen
- Triosen, wie z.B. D- und L-Glycerinaldehyd oder Dihydroxyaceton;
- Tetrosen, wie z.B. D-Erythrose oder D-Threose;
- Pentosen, wie z.B. D-Ribose, D- und L-Xylulose;
- Hexosen, wie z.B. D-Glucose, D-Mannose, D-Gulose, D-Idose, D-Galaktose, D-Glucronsäure, D-Galacturonsäure, N-Acetyl-D-glucosamin, D-Glucosamin, D-Fructose, und L-Rhamnose;

Glucose-basierte Disaccharide, wie z.B. Cellobiose, Gentiobiose, Isomaltose, Isoma-Itulose, Lactulose, Laminaribiose, Maltose, Maltulose, Melibiose, Neohesperidose, Neotrehalose, Nigerose, Rutinose, Sophorose, Saccharose und Trehalose.

Neben D-Glucose sind vor allem auch glucosereiche Kohlenhydratfraktion besonders bevorzugt, da sie leicht zugänglich und kostengünstig sind und dabei auch noch zu einer akzeptablen Absenkung des Löslichkeitsproduktes führen. Aus Kostengründen und wegen der leichten Verfügbarkeit kann man besonders bevorzugt Rüben- oder Kornstärkesirup einsetzen.

Die Kohlenhydrate können den Lactosemutterlaugen in Mengen von bis zu etwa 5 Gew.-% zugesetzt werden. Vorzugsweise beträgt die Zusatzmenge etwa 0,1 bis 3 und insbesondere etwa 1 bis 2 Gew.-%.

### VERFAHRENSDURCHFÜHRUNG

Im ersten Schritt des Verfahrens wird eine Lactoselösung, die wie oben beschrieben erhältlich ist und etwa 60 bis 95 und vorzugsweise etwa 85 bis 90 Gew.-% Lactose in der Trockenmasse aufweist, in einen vorgeheizten Kristallisationstank gepumpt. Dies kann anlagenspezifisch kontinuierlich oder batchweise erfolgen. Die Mutterlauge kann vor dem Befüllen des Tanks auf eine Temperatur oberhalb von 93,5 °C eingestellt werden, um die Bildung von alpha-Lactose zu verhindern; dies ist jedoch nicht zwingend. Es können auch Mutterlaugen eingesetzt werden, bei denen die Umwandlung von beta- in alpha-Lactose schon begonnen hat. Im Tank wird die Lösung dann auf 62 bis 67 und vorzugsweise etwa 63 bis 65 °C abgekühlt. Dazu reicht es aus, die heiße Lactoselösung sich einfach an die Starttemperatur des Kristallisationstanks anpassen zu lassen, was innerhalb von 1 bis 2 h üblicherweise der Fall ist.

Als dann wird die Lactoselösung beispielsweise kontinuierlich mit einer Geschwindigkeit von etwa 1 bis 3 °K/h bis auf 20 bis 30 und vorzugsweise etwa 23 bis 26 °C abgekühlt und dort für etwa 0,5 bis 5 und vorzugsweise etwa 1 bis 3 h gehalten. Anschließend wird Lösung mit einer Geschwindigkeit von etwa 1 bis 3 °K/h innerhalb von etwa 1 bis 3 h bis auf etwa 10 °C abgekühlt. Mit dem Beginn der Kristallabscheidung wird die Lösung etwa 12 bis 15 h bei dieser Temperatur gehalten. Insgesamt ist für das Durchlaufen des gesamten Kühlprozesses eine Zeit von etwa 18 bis 24 und vorzugsweise etwa 20 h anzusetzen. Anschließend werden die Lactosekristalle von der Mutterlauge getrennt, was vorzugsweise mit Hilfe von Dekantern die nach dem Zentrifugalprinzip arbeiten erfolgt. Grundsätzlich ist aber auch jedes andere Bauteil, mit dessen Hilfe eine Fest/Flüssig-Trennung möglich ist, für diesen Schritt geeignet. Dazu gehören beispielsweise auch Separatoren, die mit Membranen arbeiten. Die Lactosekristalle, an denen noch Mutterlauge anhaftet, werden im Anschluss schonend getrocknet, wozu sich insbesondere Bandtrockner als geeignet erwiesen haben.

### VERGLEICHSBEISPIEL V1

### Ohne Zugabe von Kohlenhydraten

Eine erste Lactose-Mutterlauge mit einem Gehalt von 89,5 Gew.-% in der Trockenmasse wurde mit einer Temperatur von etwa 95 °C in einen vorgeheizten Kristallisationstank gegeben, dort mit einer Geschwindigkeit von etwa 3 °K/h innerhalb von etwa 1 h auf 65 °C abgekühlt und für eine knappe Stunde gehalten, ehe die Lösung wiederum mit einer Geschwindigkeit von etwa 3 °K/h innerhalb von etwa 1 h auf 25 °C abgekühlt wurde. Dort wurde die Lösung weitere 3 h bei der Temperatur gehalten und dann mit einer Geschwindigkeit von 1 °K/h innerhalb 1 h bis auf 10 °C abgekühlt. Mit dem Beginn der Kristallabscheidung wurde die Lösung etwa 15 h bei dieser Temperatur gehalten, die ausgefallenen alpha-Lactosekristalle in einem Dekanter abgetrennt und auf einem Bandtrockner von anhaftender Feuchtigkeit befreit. Die zurückbleibende zweite Mutterlauge wies einen Restgehalt von 34,7 Gew.-% Lactose auf.

### BEISPIELE 1 bis 5

### Zugabe von 0,1 bis 5 Gew.-% Glucose

Der zweiten Mutterlauge aus Beispiel V1 wurden 0,1 bis 5 Gew.-% Glucose zugesetzt. Die Lösung wurde homogenisiert und dann erneut wie oben beschrieben abgekühlt und die durch Absenkung des Löslichkeitsproduktes gewonnene zusätzliche Menge an Lactosekristallen abgetrennt. In **Tabelle 1** sind die Restgehalte an Lactose in der so erhaltenen dritten Mutterlauge in Abhängigkeit von der Zusatzmenge an Glucose wiedergegeben.

**Tabelle 1**

| Restgehalt Lactose in letzter Mutterlauge (Gew.-%) | | |
|---|---|---|
| **Beispiel** | **Glucosemenge** | **Restmenge Lactose in Mutterlauge** |
| V1 | 0 | 34,7 |
| 1 | 0,1 | 30,5 |
| 2 | 0,5 | 28,1 |
| 3 | 1,0 | 22,4 |
| 4 | 2,0 | 15,3 |
| 5 | 5,0 | 15,2 |

### BEISPIELE 6 bis 10

### Zugabe von 2 Gew.-% Kohlenhydrate

Der zweiten Mutterlauge aus Beispiel V1 wurden 2 Gew.-% verschiedener Kohlenhydrate zugesetzt. Die Lösung wurde homogenisiert, dann erneut wie oben beschrieben abgekühlt und die durch Absenkung des Löslichkeitsproduktes gewonnene zusätzliche Menge an Lactosekristallen abgetrennt. In **Tabelle 2** sind die Restgehalte an Lactose in der so erhaltenen dritten Mutterlauge in Abhängigkeit der Zusatzmenge an Kohlenhydrat wiedergegeben.

**Tabelle 2**

| Restgehalt Lactose in letzter Mutterlauge (Gew.-%) | | |
|---|---|---|
| **Beispiel** | **Kohlenhydrat** | **Restmenge Lactose in Mutterlauge** |
| V1 | ohne | 34,7 |
| 6 | Glucose | 15,3 |
| 7 | Saccharose | 16,4 |
| 8 | Melasse | 16,3 |
| 9 | Zuckerrübensirup | 17,1 |
| 10 | Kornstärkesirup | 17,5 |

### BEISPIELE 10 bis 15

### Zugabe der Kohlenhydrate zur ersten Mutterlauge

Eine erste Lactose-Mutterlauge mit einem Gehalt von 89,5 Gew.-% in der Trockenmasse wurde mit 2 Gew.-% Kohlenhydraten versetzt, homogenisiert und mit einer Temperatur von etwa 95 °C in einen vorgeheizten Kristallisationstank gegeben, dort mit einer Geschwindigkeit von etwa 3 °K/h innerhalb von etwa 1 h auf 65 °C abgekühlt und für eine knappe Stunde gehalten, ehe die Lösung wiederum mit einer Geschwindigkeit von etwa 3 °K/h innerhalb von etwa 1 h auf 25 °C abgekühlt wurde. Dort wurde die Lösung weitere 3 h bei der Temperatur gehalten und dann mit einer Geschwindigkeit von 1 °K/h innerhalb 1 h bis auf 10 °C abgekühlt. Mit dem Beginn der Kristallabscheidung wurde die Lösung etwa 15 h bei dieser Temperatur gehalten, die ausgefallenen alpha-Lactosekristalle in einem Dekanter abgetrennt und auf einem Bandtrockner von anhaftender Feuchtigkeit befreit. In **Tabelle 3** sind die Restgehalte an Lactose in der so erhaltenen zweiten Mutterlauge in Abhängigkeit von der Art des Kohlenhydrats wiedergegeben.

**Tabelle 3**

| Restgehalt Lactose in letzter Mutterlauge (Gew.-%) | | |
|---|---|---|
| **Beispiel** | **Kohlenhydrat** | **Restmenge Lactose in Mutterlauge** |
| V1 | ohne | 34,7 |
| 11 | Glucose | 21,4 |
| 12 | Saccharose | 22,3 |
| 13 | Melasse | 23,7 |
| 14 | Zuckerrübensirup | 23,5 |
| 15 | Kornstärkesirup | 23,8 |

## Patentansprüche

1. Verfahren zur Verbesserung der Ausbeute bei der Herstellung von kristalliner alpha-Lactose, bei dem man
(a1) eine wässrige Lactoselösung schrittweise bis auf etwa 10 °C abkühlt,
(a2) eine erste Menge ausgefallener alpha-Lactosekristalle von der Mutterlauge abtrennt,
(a3) die Mutterlauge mit einer solchen Menge an Kohlenhydratverbindungen ausgewählt aus der Gruppe, die gebildet wird von Monosacchariden, Cellobiose, Gentiobiose, Isomaltose, Isomaltulose, Lactulose, Laminaribiose, Maltose, Maltulose, Melibiose, Neohesperidose, Neotrehalose, Nigerose, Rutinose, Sophorose, Saccharose und Trehalose versetzt, dass das Löslichkeitsprodukt der noch in Lösung befindlichen Restmenge an Lactose überschritten wird,
(a4) eine zweite Menge ausgefallener alpha-Lactosekristalle von der Mutterlauge abtrennt und
(a5) die beiden Mengen an alpha-Lactosekristallen vereinigt.

2. Verfahren zur Verbesserung der Ausbeute bei der Herstellung von kristalliner alpha-Lactose, bei dem man
(b1) eine wässrige Lactoselösung mit einer solchen Menge an Kohlenhydratverbindungen ausgewählt aus der Gruppe, die gebildet wird von Monosacchariden, Cellobiose, Gentiobiose, Isomaltose, Isomaltulose, Lactulose, Laminaribiose, Maltose, Maltulose, Melibiose, Neohesperidose, Neotrehalose, Nigerose, Rutinose, Sophorose, Saccharose und Trehalose versetzt, dass das Löslichkeitsprodukt der der in Lösung befindlichen Menge an Lactose überschritten wird
(b2) die Lactoselösung schrittweise bis auf etwa 10 °C abkühlt,
(b3) und die Menge an ausgefallenen alpha-Lactosekristallen von der Mutterlauge abtrennt.

3. Verfahren nach en Ansprüchen 1 oder 2, **dadurch gekennzeichnet, dass** man als Kohlenhydratverbindung Monosacharide einsetzt.

4. Verfahren nach mindestens einem der Ansprüche 1 bis 3, **dadurch gekennzeichnet, dass** man als Kohlenhydratverbindung Glucose einsetzt.

5. Verfahren nach mindestens einem der Ansprüche 1 bis 3, **dadurch gekennzeichnet, dass** man als Kohlenhydratverbindung eine glucosereiche Kohlenhydratfraktion einsetzt.

6. Verfahren nach Anspruch 5, **dadurch gekennzeichnet, dass** man als glucosereiche Kohlenhydratverbindung Rüben- oder Kornstärkesirup einsetzt.

7. Verfahren nach mindestens einem der Ansprüche 1 bis 6, **dadurch gekennzeichnet, dass** man die Kohlenhydratverbindungen der Mutterlauge in Mengen von bis zu 5 Gew.-% zusetzt.

8. Verfahren nach mindestens einem der Ansprüche 1 bis 7, **dadurch gekennzeichnet, dass** man die Kohlenhydratverbindungen der Mutterlauge in Mengen von 0,1 bis 3 Gew.-% zusetzt.

9. Verfahren nach mindestens einem der Ansprüche 1 bis 8, **dadurch gekennzeichnet, dass** man die alpha-Lactosekristalle mit Hilfe eines Dekanters abtrennt.

10. Verfahren nach mindestens einem der Ansprüche 1 bis 8, **dadurch gekennzeichnet, dass** man die abgetrennten alpha-Lactosekristalle mit Hilfe eines Bandtrockners entwässert.

11. Verfahren zur Herstellung von kristalliner alpha-Lactose, bei dem man
(i) Molke einem Trennverfahren unterwirft, bei dem eine proteinreiche und eine lactosereiche Fraktion erhalten wird,
(ii) die lactosereiche Fraktion gegebenenfalls nach Aufkonzentrierung einer Demineralisierung unterwirft, bei der schwerlösliche Salze gefällt werden,
(ii) den demineralisierten Rückstand gegebenenfalls nach weiterer Aufkonzentrierung abkühlt, bis Lactose kristallin ausfällt,
**dadurch gekennzeichnet, dass** man
(a1) eine erste Menge ausgefallener alpha-Lactosekristalle von der Mutterlauge abtrennt,
(a2) die Mutterlauge mit einer solchen Menge einer Kohlenhydratverbindungen ausgewählt aus der Gruppe, die gebildet wird von Monosacchariden, Cellobiose, Gentiobiose, Isomaltose, Isomaltulose, Lactulose, Laminaribiose, Maltose, Maltulose, Melibiose, Neohesperidose, Neotrehalose, Nigerose, Rutinose, Sophorose, Saccharose und Trehalose versetzt, dass das Löslichkeitsprodukt der Lactose bei der jeweiligen Temperatur überschritten wird,
(a3) eine zweite Menge ausgefallener alpha-Lactosekristalle von der Mutterlauge abtrennt und
(a4) die beiden Mengen an alpha-Lactosekristallen vereinigt,
oder
(b1) eine wässrige Lactoselösung mit einer solchen Menge einer Kohlenhydratverbindungen ausgewählt aus der Gruppe, die gebildet wird von Monosacchariden, Cellobiose, Gentiobiose, Isomaltose, Isomaltulose, Lactulose, Laminaribiose, Maltose, Maltulose, Melibiose, Neohesperidose, Neotrehalose, Nigerose, Rutinose, Sophorose, Saccharose und Trehalose versetzt, dass das Löslichkeitsprodukt der der in Lösung befindlichen Menge an Lactose überschritten wird
(b2) die Lactoselösung schrittweise bis auf etwa 10 °C abkühlt,
(b3) und die Menge an ausgefallenen alpha-Lactosekristallen von der Mutterlauge abtrennt.

## Claims

1. A method for improving the yield of the production of crystalline alpha-lactose, wherein
(a1) an aqueous lactose solution is gradually cooled down to about 10 °C,
(a2) a first amount of precipitated alpha-lactose crystals is separated from the mother liquor,
(a3) an amount of a carbohydrate compound selected from the group consisting of monosaccharides, cellobiose, gentiobiose, isomaltose, isomaltulose, lactulose, laminaribiose, maltose, maltulose, melibiose, neohesperidose, neotrehalose, nigerose, rutinose, sophorose, saccharose and trehalose is added to the mother liquor such that the solubility product of the residual amount of lactose still held in solution is exceeded,
(a4) a second amount of precipitated alpha-lactose crystals is separated from the mother liquor and
(a5) both amounts of alpha-lactose crystals are combined.

2. A method for improving the yield of the production of crystalline alpha lactose, wherein
(b1) an amount of a carbohydrate compound selected from the group consisting of monosaccharides, cellobiose, gentiobiose, isomaltose, isomaltulose, lactulose, laminaribiose, maltose, maltulose, melibiose, neohesperidose, neotrehalose, nigerose, rutinose, sophorose, saccharose and trehalose is added to an aqueous lactose solution such that the solubility product of the residual amount of lactose still held in solution is exceeded
(b2) the lactose solution is gradually cooled down to about 10 °C,
(b3) and the amount of precipitated alpha-lactose crystals is separated from the mother liquor.

3. The method of claims 1 and 2, **characterized in that** mono- or disaccharides are used as carbohydrate compounds.

4. he method of at least one of claims 1 to 3, **characterized in that** glucose is used as the carbohydrate compound.

5. The method of at least one of claims 1 to 4, **characterized in that** that glucose or a glucose-rich carbohydrate fraction is used.

6. The method of claim 5, **characterized in that** sugar beet syrup or corn starch syrup is used.

7. The method of at least one of claims 1 to 6, **characterized in that** the carbohydrate compounds are added to the mother liquor in amounts of up to 5 % by weight.

8. The method of at least one of claims 1 to 7, **characterized in that** the carbohydrate compounds are added to the mother liquor in amounts of from 0.1 to 3 % by weight.

9. The method of at least one of claims 1 to 8, **characterized in that** the alpha-lactose crystals are separated by means of a decanter.

10. The method of at least one of claims 1 to 8, **characterized in that** the separated alpha-lactose crystals are evaporated by means of a belt dryer.

11. A method for the production of crystalline alpha-lactose, wherein
(i) whey is subjected to a separation process in which a protein-rich and a lactose-rich fraction is obtained,
(ii) the lactose-rich fraction is subjected to demineralisation, optionally after concentration, in which slowly soluble salts are precipitated,
(ii) the demineralised residue is cooled down, optionally after further concentration, until lactose precipitates in crystalline form,
**characterized in that**
(a1) a first amount of precipitated alpha-lactose crystals is separated from the mother liquor,
(a2) an amount of a carbohydrate compound selected from the group consisting of monosaccharides, cellobiose, gentiobiose, isomaltose, isomaltulose, lactulose, laminaribiose, maltose, maltulose, melibiose, neohesperidose, neotrehalose, nigerose, rutinose, sophorose, saccharose and trehalose is added to the mother liquor such that the solubility product of the lactose is exceeded at the given temperature,
(a3) a second amount of precipitated alpha-lactose crystals are separated from the mother liquor, and
(a4) both amounts of alpha-lactose crystals are combined,
or
(b1) an amount of a carbohydrate compound selected from the group consisting of monosaccharides, cellobiose, gentiobiose, isomaltose, isomaltulose, lactulose, laminaribiose, maltose, maltulose, melibiose, neohesperidose, neotrehalose, nigerose, rutinose, sophorose, saccharose and trehalose is added to an aqueous lactose solution such that the solubility product of the amount of lactose held in solution is exceeded,
(b2) the lactose solution is gradually cooled down to about 10 °C,
(b3) and the amount of precipitated alpha-lactose crystals is separated from the mother liquor.

## Revendications

1. Procédé d'amélioration du rendement lors de la fabrication d'alpha-lactose cristallin, selon lequel
(a1) une solution aqueuse de lactose est refroidie graduellement à environ 10 °C,
(a2) une première quantité de cristaux d'alpha-lactose précipités est séparée de la liqueur mère,
(a3) la liqueur mère est mélangée avec une quantité de composés glucidiques, choisis dans le groupe constitué par les monosaccharides, le cellobiose, le gentiobiose, l'isomaltose, l'isomaltulose, le lactulose, le laminaribiose, le maltose, le maltulose, le mélibiose, le néohespéridose, le néotréhalose, le nigérose, le rutinose, le sophorose, le saccharose et le tréhalose, telle que le produit de solubilité de la quantité résiduelle de lactose se trouvant encore en solution soit dépassé,
(a4) une seconde quantité de cristaux d'alpha-lactose précipités est séparée de la liqueur mère, et
(a5) les deux quantités de cristaux d'alpha-lactose sont réunies.

2. Procédé d'amélioration du rendement lors de la fabrication d'alpha-lactose cristallin, selon lequel
(b1) une solution aqueuse de lactose est mélangée avec une quantité de composés glucidiques, choisis dans le groupe constitué par les monosaccharides, le cellobiose, le gentiobiose, l'isomaltose, l'isomaltulose, le lactulose, le laminaribiose, le maltose, le maltulose, le mélibiose, le néohespéridose, le néotréhalose, le nigérose, le rutinose, le sophorose, le saccharose et le tréhalose, telle que le produit de solubilité de la quantité de lactose se trouvant en solution soit dépassé,
(b2) la solution de lactose est refroidie graduellement à environ 10 °C,
(b3) et la quantité de cristaux d'alpha-lactose précipités est séparée de la liqueur mère.

3. Procédé selon la revendication 1 ou 2, **caractérisé en ce que** des monosaccharides sont utilisés en tant que composé glucidique.

4. Procédé selon au moins l'une quelconque des revendications 1 à 3, **caractérisé en ce que** du glucose est utilisé en tant que composé glucidique.

5. Procédé selon au moins l'une quelconque des revendications 1 à 3, **caractérisé en ce qu'**une fraction glucidique riche en glucose est utilisée en tant que composé glucidique.

6. Procédé selon la revendication 5, **caractérisé en ce que** du sirop de betterave ou d'amidon de maïs est utilisé en tant que composé glucidique riche en glucose.

7. Procédé selon au moins l'une quelconque des revendications 1 à 6, **caractérisé en ce que** les composés glucidiques sont ajoutés à la liqueur mère en quantités de jusqu'à 5 % en poids.

8. Procédé selon au moins l'une quelconque des revendications 1 à 7, **caractérisé en ce que** les composés glucidiques sont ajoutés à la liqueur mère en quantités de 0,1 à 3 % en poids.

9. Procédé selon au moins l'une quelconque des revendications 1 à 8, **caractérisé en ce que** les cristaux d'alpha-lactose sont séparés à l'aide d'un décanteur.

10. Procédé selon au moins l'une quelconque des revendications 1 à 8, **caractérisé en ce que** les cristaux d'alpha-lactose séparés sont déshydratés à l'aide d'un séchoir à bande.

11. Procédé de fabrication d'alpha-lactose cristallin, selon lequel
(i) du lactosérum est soumis à un procédé de séparation selon lequel une fraction riche en protéines et une fraction riche en lactose sont obtenues,
(ii) la fraction riche en lactose est soumise, éventuellement après une concentration, à une déminéralisation, lors de laquelle des sels difficilement solubles sont précipités,
(iii) le résidu déminéralisé est refroidi, éventuellement après une concentration supplémentaire, jusqu'à la précipitation de lactose cristallin,
**caractérisé en ce que**
(a1) une première quantité de cristaux d'alpha-lactose précipités est séparée de la liqueur mère,
(a2) la liqueur mère est mélangée avec une quantité de composés glucidiques, choisis dans le groupe constitué par les monosaccharides, le cellobiose, le gentiobiose, l'isomaltose, l'isomaltulose, le lactulose, le laminaribiose, le maltose, le maltulose, le mélibiose, le néohespéridose, le néotréhalose, le nigérose, le rutinose, le sophorose, le saccharose et le tréhalose, telle que le produit de solubilité du lactose à la température en question soit dépassé,
(a3) une seconde quantité de cristaux d'alpha-lactose précipités est séparée de la liqueur mère et
(a4) les deux quantités de cristaux d'alpha-lactose sont réunies,
ou
(b1) une solution aqueuse de lactose est mélangée avec une quantité de composés glucidiques, choisis dans le groupe constitué par les monosaccharides, le cellobiose, le gentiobiose, l'isomaltose, l'isomaltulose, le lactulose, le laminaribiose, le maltose, le maltulose, le mélibiose, le néohespéridose, le néotréhalose, le nigérose, le rutinose, le sophorose, le saccharose et le tréhalose, telle que le produit de solubilité de la quantité de lactose se trouvant en solution soit dépassé,
(b2) la solution de lactose est refroidie graduellement à environ 10 °C,
(b3) et la quantité de cristaux d'alpha-lactose précipités est séparée de la liqueur mère.
